Europäisches Patentamt

European Patent Office

Office européen des brevets

(11) Publication number: **0 183 399**
A2

# EUROPEAN PATENT APPLICATION

(21) Application number: 85307942.4

(22) Date of filing: 01.11.85

(51) Int. Cl.⁴: **H 01 G 1/147**

(30) Priority: 28.11.84 US 675904

(43) Date of publication of application:
04.06.86 Bulletin 86/23

(84) Designated Contracting States:
AT BE CH DE FR GB IT LI LU NL SE

(71) Applicant: ENGELHARD CORPORATION
70 Wood Avenue South CN 770
Iselin New Jersey 08830(US)

(72) Inventor: Constantine, John C.
197 Hillside Avenue
Chatham New Jersey(US)

(74) Representative: Fisher, Adrian John et al,
Carpmaels & Ransford 43 Bloomsbury Square
London WC1A 2RA(GB)

(54) Method and composition for producing terminations in multilayer ceramic capacitors.

(57) A method and composition for forming electrically conductive termination films on ceramic capacitor bodies having improved adhesion and solder leach resistance wherein a mixture of a palladium resinate and a base metal resinate or oxide is deposited on the opposite end faces of the capacitor body. The deposit is fired at 700° – 1100°C to pyrolyze the resinate moiety of the metal resinates, whereby palladium and base metal oxide residues are formed on the end faces of the capacitor. The residues catalyze the depositon of nickel from nickel plating baths to prepare solder leach resistant end faces.

FIG. 2.

EP 0 183 399 A2

IR 3015

(014-840362-NA)

METHOD AND COMPOSITION FOR PRODUCING TERMINATIONS
IN MULTILAYER CERAMIC CAPACITORS

This invention relates to a multilayer ceramic capacitor and more particularly to a method and composition for producing a conductive, solderable termination for the capacitor.

Multilayer ceramic capacitors, often referred to as chip capacitors consist of alternate layers of ceramic dielectric which separates alternately polarized metal electrodes. The structure is laminated in a "green" state and fired. The ceramic provides not only the dielectric layers but also the mechanical matrix for the electrodes and the encasement system which affords the unit its environmental protection.

Alternate layers of electrode commonly extend to opposite ends of the capacitor and are interconnected at the ends of the capacitor by a conductive metal-frit termination film, usually silver-

glass or silver-palladium-glass, which is also fired and thereby bonded to the ends of the capacitor. The termination film on the ends of the capacitor not only electrically connects each electrode layer of like polarity, but provides a solderable media. Solder is commonly used to attach leads to the capacitor or to directly connect the capacitor to a circuit substrate.

In the prior art practice of applying termination films to the multilayer capacitor, silver particles or particles of silver-palladium alloys or admixes are dispersed in an inert liquid carrier in combination with an inorganic binder to form an ink or paste for convenient application to the face of the capacitor ends. The inorganic binder, suitably a glass frit, serves to bind the metal particles to the capacitor end face and to one another when the ink is applied to and fired onto the ends of the capacitor.

Silver based inks are normally employed to prepare termination films. However, if leach resistance of the film to solder is a critical factor, then silver-palladium based inks are employed to prepare the termination film. Solder leach resistance is the ability of the termination film to remain adherent to the capacitor substrate for an extended residence time, e.g. 10 to 30 seconds in a molten solder bath. The solder leach resistance of the terminal film can be increased by electroplating thereon, a nickel layer, the nickel acting as a protective barrier between the silver, or silver-palladium film and the solder bath.

Silver and palladium are costly precious metals. Generally, the thickness of the termination film ranges from 15 to 50 microns. A major problem in the manufacture of multilayer capacitors is the rising costs of precious metals, which has a significant effect on the economics of capacitor fabrication. The cost of the termination film is, of course, dependent of the thickness of the film applied to the capacitor end face. There is, therefore, a desire in the art to decrease the thickness of the termination film without sacrifice of solder leach resistance or electrical properties whereby substantial cost savings can be achieved in the manufacture of the multilayer capacitors.

In accordance with the practice of the present invention, a thin (e.g. 1 to 3 microns) conductive, adherent, a solder leach resistant termination film is applied to the end faces of a multilayer ceramic capacitor by depositing on each end face of the capacitor an ink containing a metal resinate mixture suspended or dissolved in a liquid organic carrier, the mixture being comprised of a palladium resinate and at least one base metal resinate or oxide to promote adhesion of the palladium to the ceramic end face. The deposited ink is then heated to a temperature of about 700 to about $1100^{o}C$ to pyrolyze the organic moiety of the resinates to form a palladium residue and a base metal oxide residue whereby the base metal oxide residue forms a glass binder to promote the adhesion of the palladium to the capacitor end face to form a terminal of the capacitor in electrical contact with the edges of the capacitor electrodes.

The sensitization may also be accomplished, by techniques well known to practitioners in the art, by using a combination of palladium and tin chloride "activator" solutions, and subsequently causing a monomolecular layer of catalytic conductive metal to be formed. Alternatively, one may use a one step colloidal mixture of this or a "two solution" combination of the palladium and tin compound.

## BRIEF DESCRIPTION OF THE DRAWINGS

Figure 1 is a perspective view of a multilayer capacitor having a fired on termination film on the opposite end faces of the capacitor in accordance with the invention.

Figure 2 is a side sectional view of the capacitor shown in Figure 1 taken along line 2-2 of Figure 1.

## DESCRIPTION OF THE PREFERRED EMBODIMENTS

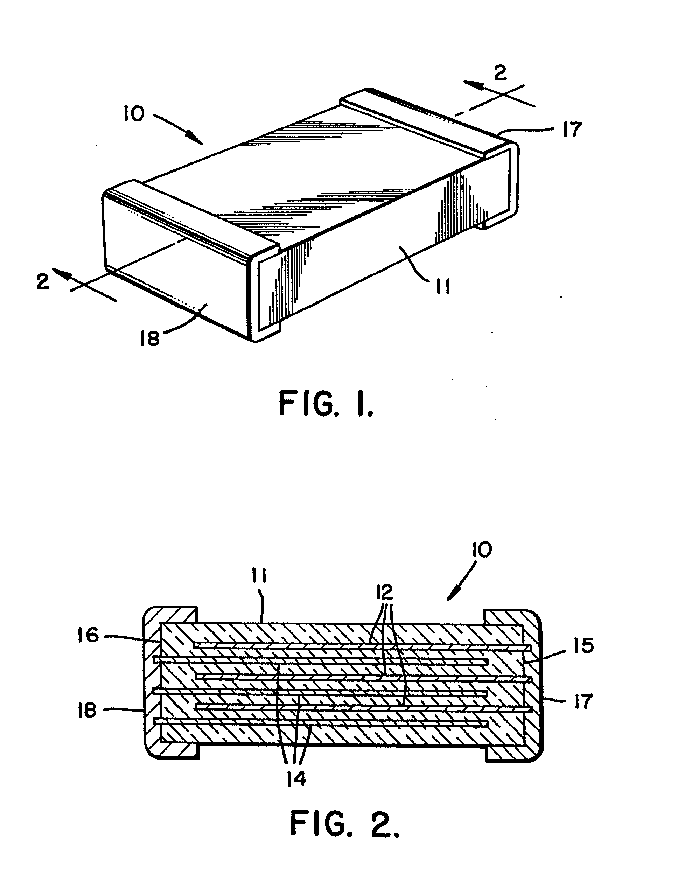

Referring to Figures 1 and 2, there is shown a multilayer ceramic capacitor 10 having a ceramic body 11 and interleaved therein is a plurality of electrode layers 12 and 14. Adjacent electrode layers are separated by a thin region of the ceramic material of the body 11. Alternate electrode layers 12 have edges that extend to one face 15 of the body 11 and alternate electrode layers 14 extend to another and opposite face 16 of the body 11. Palladium and base metal oxide-containing residues 17 and 18 are deposited on the faces 15 and 16 of the body 11, the residues 17 and 18 making intimate electrical contact with the edges of the electrodes 12 and 14. The two palladium -base metal oxide-containing faces serve as the terminals of the capacitor. The drawings of the Figures are not to scale, and more particularly the thickness of the electrodes are exaggerated to more clearly show the construction.

The palladium termination films 17 and 18 are composed of palladium and base metal oxide residues which catalyze the deposition of nickel from plating baths. Silver and palladium-silver are not used as silver does not act as a catalyst or sensitizer for nickel plating baths.

To prepare the termination films 17 and 18, an ink composition containing a mixture of a palladium resinate and a base metal resinate or oxide are conveniently printed onto the ends 15 and 16 of a ceramic multilayer capacitor 10 by transfer printing.

The capacitor body 11 having the ink composition of the present invention applied to one end 15 is dried at a low temperature in the range of about 175°C to about 200°C for about 5 to 10 minutes to decompose the resinate whereby the applied layer adheres sufficently to the end 15 so that it can be further processed. Thereafter, the ink composition is applied to the opposite end 16 of the capacitor body 11 and the capacitor is again heated to about 175°C to again decompose the resinate and adhere the applied layer to the end 16. Generally the thickness of the applied ink film ranges from about 2 to about 20 microns and preferably from about 7 to about 10 microns. Next the capacitor body 11 having the decomposed ink films applied thereto are heated at a higher temperature, e.g. 700° - 1100°C in an oxidizing atmosphere to form a palladium and base metal oxide residue. The palladium and base metal oxides in the fired residue have extremely small particle sizes e.g. in the order less than $0.1\mu$ and in such state are extremely active as catalysts for electroless plating. Thereafter the terminal end films 17, 18 are nickel plated by immersing the ends 15, 16 in a nickel plating bath such as electroless phosphorous nickel, electroless boron-nickel or watt's nickel bath to produce a nickel plating of 1-3 microns thickness. The

0183399

-8-

nickel plating produces a bright nickel finish on the palladium based terminal films which is readily solderable with excellent solder leach resistance.

The term "resinate" or "metal resinate" used in the present specification and claims is known to the art and includes within its meaning the reaction product of any of several organic compounds with a metal containing compound such as a salt or hydroxide. The resulting metal-organic compound is essentially a long chain (e.g. 6 to 20 carbon atoms) organic molecule in which one site is occupied by one or more metal ions.

The metal resinates used in the practice of the present invention may range from highly fluid to very viscous liquids or may be solids.

In a preferred embodiment of the invention, the metal component of the metal resinate is liked through an oxygen or nitrogen atom to the organic moiety of the resinate. Thus, preferred metal resinates useful in the practice of the present invention have the general formula

$$Me-X-R$$

wherein Me is a palladium, or an oxidizable base metal X is selected from O or N and R is a hydrocarbon group containing up to 20 carbon atoms and is preferably a straight or branched chain alkyl group containing 6 to 20 carbon atoms which will render the metal resinate soluble in organic liquid carriers to prepare the inks used to deposit the termination film layers on the capacitor end faces.

The metal resinates used in the practice of the present invention are simply prepared by reacting a suitable metal chloride or acetate with an organic acid such as 2-ethylhexanoic acid, or neodecanoic acid at a temperature of $20^{\circ}$ to $200^{\circ}$C with the removal of water or acid by-product.

The term "base metal" includes within its meaning metals such as lead, tin, silicon, boron, titanium, zinc and manganese.

Base metal resinates used in the practice of the present invention are known to the art and are available commercially. Illustrative of such base metal resinates are 2-ethylhexylborate, lead, manganese, zinc, silicon, 2-ethylhexoates; silicon neodeconate, tetrabutyl titanate and titanium neopentanoate. Suitable base metal oxides useful in the practice of the present invention include $SiO_2$ and particularly fumed silica.

The ink compositions of the present invention are comprised of a mixture of the palladium resinate and base metal resinate or oxide which may or may not be suspended or dissolved in an organic liquid carrier which can comprise about 0 to about 90% by weight of the ink composition. With respect to the metal resinate mixture, the palladium resinate comprises about 70 to about 85 percent by weight of the mixture and the base metal resinate or oxide comprises about 15 to about 30 percent of the solids mixture. At these resinate concentrations, the amount of palladium present in the pyrolyzed terminal film ranges from about 70 to about 95 percent by weight, and the base metal oxide comprises about 5 to about 30 percent by weight.

In general, the organic liquid carrier used in the preparation of the palladium resinate based ink compositions of the present invention are vaporizable at temperatures which are below those used to initially decompose the ink composition after its application to the ceramic capacitor substrate to form the terminal film. Thus, this liquid should be vaporizable at temperatures below 175°C. Also, any organic residues left after the drying operation following application of the ink composition to the capacitor substrate should be substantially completely combustible to volatile by-products at the temperatures used for firing, e.g. 700° - 1100°C.

The composition of the organic carrier liquid when employed in the ink composition can vary widely, and the exact composition of such in any given ink composition of this invention is relatively unimportant. Organic fluids such as hydrocarbons, alcohols, esters, ketones, aldehydes, heterocyclics, mixtures thereof, and the like can be employed since the organic liquid carrier is merely a dispersing agent for the palladium resinate and metal resinate compounds. The amount of liquid carrier used to prepare the palladium resinate based terminal film composition depends upon the manner in which the composition is to be applied to the palladium capacitor substrate. For transfer printing the palladium resinate based terminal ink film onto the capacitor substrate, a thicker paste-like ink composition is desirable, whereas for dipping, brushing or spraying, a thinner ink formulation is desirable.

After the palladium resinate and base metal resinate or oxide compounds are suspended in the organic liquid carrier, the ink components are homogeneously blended by stirring or in a suitable mixing device, as for example, a roll mill when fused silica is used, and thereafter the ink is ready for use.

The present invention is further illustrated by reference to the following example. Those skilled in the art will appreciate that other and further embodiments are obvious and within the spirit and scope of this invention from the teachings of the present examples taken with the accompanying specification.

## EXAMPLE I

A palladium resinate based ink formulation suitable for use as a terminal end film for ceramic multilayer capacitors was prepared having the following composition:

| A. | Components | Wt. Percent |
|----|-----------|-------------|
| | Palladium neodecanoate | 53.6 |
| | Lead 2-ethylhexoate | 4.7 |
| | 2-Ethylhexylborate | 16.0 |
| | Silicon Benzyloxy/2-ethylhexoate | 9.0 |
| | Tetra-l-Propyltitanate | 16.7 |

As all the components were in liquid form, the components were directly mixed and blended by stirring. Following such blending, the ink product was found to have a viscosity such that it could be used for transfer printing.

The ink product was applied with a doctor blade onto a F.O.G. (fineness of grind guage) block which is an apparatus known for testing inks for degree of dispersion in the ink and paint industries. Using a F.O.G. block, solution film thicknesses of 0-12.5 microns can be formed on the block. An ink solution of 10 microns was picked up from the F.O.G. block surface by a silicone rubber pad of the type used for transfer printing. Referring to Figure 2, the rubber pad was used to transfer the film onto the ends 15 and 16 of a 0.050' x 0.080' ceramic multilayer capacitor 10. The

0183399

-14-

wet ends of the ink coated capacitor, after each application, were heated at 175°C for 10 minutes and then fired in a belt furnace at a peak temperature of 850°C for 10 minutes.

The fired terminal films 17, 18 were then plated in a nickel-boron electroless nickel plating bath commercially available under the trademark designation Niklad 752 from the Allied-Kelite Division of Witco Chemical, at a pH of 6.0 - 6.5 for 20 minutes. The nickel plate was bright and was 1-3 microns thick. The nickel plated terminal ends 17, 18 were then fluxed and dip-soldered at 220°C in a molten solder bath containing 40% tin and 60% lead. The terminal ends exhibited improved solder leach resistance as evidenced by the fact that after 30 seconds of immersion in the solder bath, there was no evidence of solder leach or dewetting.

To determine the adhesion of the terminal film to the ceramic capacitor, axial leads were soldered to the nickel plated terminal ends and were pulled by a Unitek micropull adhesion tester. The force required to separate the lead from the terminal film was found to average/(12.1 pounds), which is

5.5 kg

considered to be superior adhesion.

EXAMPLE II

The procedure of Example I was repeated using the following ink composition:

| COMPONENTS | Wt. Percent |
|---|---|
| Palladium neodeconate | 77.8 |
| Lead 2-ethylhexoate | 3.0 |
| 2-Ethylhexylborate | 10.5 |
| Silicon Benzoyl/2-ethylhexoate | 5.7 |
| Tetra-1-propyltitanate | 3.0 |

The fired terminal films prepared from the above ink composition were nickel plated following the procedure of Example I. The nickel plated terminal ends exhibited solder leach resistance equivalent to that of Example I and further exhibited an average value of (12.5 pounds) 5.7 kg when tested for adhesion.

While specific components of the present invention are defined in the working example above, many other variables may be introduced which may in any way affect, enhance or other wise improve the present invention. These are intended to be included herein.

Although variations are shown in the present application, many modifications and ramifications may occur to those skilled in the art upon reading the present disclosure. These, too, are intended to be included herein.

0183399

-17-

CLAIMS

1. A method of providing a conductive termination film on a ceramic capacitor substrate comprising the steps of:

    (a)  applying to the surface of the ceramic substrate a composition comprised of a metal resinate mixture of a palladium resinate and a base metal resinate, or oxide and then

    (b)  firing the mixture in an oxidizing atmosphere at a temperature sufficient to pyrolyze the organic moiety of the resinates and form on the substrate.

2. The method of Claim 1, wherein the composition as applied to the ceramic capacitor substrate contains about 70 to about 85 percent by weight of the palladium resinate and about 15 to about 30 percent by weight of the base metal resinate or oxide.

3. The method of Claim 1/ or Claim 2 wherein the mixture is fired at about 700 to about 1100°C.

4. The method of/ any preceding Claim wherein the composition contains at least two base metal resinates containing different metal components.

5. The method of/ any preceding Claim wherein the base metal resinate is selected from the group of resinates consisting of lead, tin, titanium, boron, zinc, manganese and silicon resinates and mixtures thereof.

6. The method of /any preceding Claim wherein the metal resinates have the general formula Me-X-R wherein Me is a metal selected from the group consisting of palladium and base metals, X is an atom selected from the group consisting of oxygen and nitrogen and R is an alkyl group containing 6 to 20 carbon atoms.

-19-

7.   An electrically conductive composition adapted to be applied to and fired on a ceramic body comprising a mixture of a palladium resinate and one or more base metal resinates or oxides, the fired composition exhibiting improved adhesion to the ceramic body and after nickel plating, improved solder leach resistance.

8.   The composition of Claim 7 wherein the composition contains about 70 to about 85 percent by weight of the palladium resinate and about 30 to about 15 percent by weight of the base metal resinate or oxide.

9.   The composition of Claim 7 /wherein the composition contains at least two base metal resinates containing different metal components.

or Claim 8

10.   The composition/of Claims7/wherein the base metal resinate is selected from the group consisting of lead, tin, titanium, boron, zinc, manganese and silicon resinates and mixtures thereof.

any of        to 9

11. The composition of/Claims any of 7 to 10 /wherein the metal- resinates have the general formula Me-X-R wherein Me is a metal selected from the group consisting of palladium and base metals, X is an atom selected from the group consisting of oxygen and nitrogen and R is an alkyl group containing 6 to 20 carbon atoms.

FIG. I.

FIG. 2.